# EUROPÄISCHE PATENTANMELDUNG

(11) **EP 1 704 953 A1**
(43) Veröffentlichungstag der Anmeldung: **27.09.2006**
(21) Anmeldenummer: 06005160.4
(22) Anmeldetag: 14.03.2006
(51) Int. Cl.: B23G 5/18

(54) **Bohrgewindefräser**

(30) Priorität: 24.03.2005 DE 102005014422
(71) Anmelder: EMUGE-Werk Richard Glimpel GmbH & Co.KG Fabrik für Präzisionswerkzeuge, 91207 Lauf (DE)
(72) Erfinder: Glimpel, Helmut, Dipl.-Ing., 91207 Lauf (DE); Sperber, Matthias, 91244 Reichenschwand (DE)
(74) Vertreter: Schröer, Gernot H.

(57) **Zusammenfassung**

Die Erfindung betrifft einen Bohrgewindefräser (1) zur Herstellung einer Bohrung und anschließendem Fräsen eines Gewindes in die Bohrung, der einen Arbeitsbereich (2) aufweist, an dessen Umfang (3) eine Anzahl Bohr- bzw. Frässchneiden angeordnet sind. In Drehrichtung sind eine um einen Faktor größer 2 größere Anzahl Frässchneiden (7, 8, 9, 10) als Bohrschneiden (17) angeordnet oder wirksam

## Beschreibung

Die Erfindung betrifft einen Bohrgewindefräser gemäß dem Oberbegriff des Patentanspruchs 1.

Bohrgewindefräser dieser Art sind beispielsweise aus WO 2004/022274 A1 oder US 4,651,374 A oder US 4,761,844 A oder aus Handbuch der Gewindetechnik und Frästechnik, Herausgeber: EMUGE-FRANKEN, Verlag: Publicis Corporate Publishing, Erscheinungsjahr: 2004 (ISBN 3-89578-232-7), Seite 354 bekannt. Mit einem solchen Werkzeug ist es möglich, zunächst eine, im Allgemeinen zylindrische, Bohrung in ein Werkstück einzubringen. Zu diesem Zweck weisen bekannte Bohrgewindefräser Bohrschneiden auf, mit denen die Bohrung hergestellt werden kann. Ist dies geschehen, wird der Fräser radial zugestellt, d. h. aus dem Zentrum der Bohrung in eine Stellung parallel zur Bohrungsachse verschoben. Am Schaft des Werkzeugs sind Frässchneiden oder Fräszähne angeordnet, mit denen dann mittels Zirkulargewindefräsen in die Bohrung ein Gewinde eingebracht werden kann. Die Schneiden oder Fräszähne des Fräsers greifen dabei gemeinsam in die Bohrungswand ein, wobei unter Drehung des Werkzeugs und unter gleichzeitiger Ausführung einer Schraubenbewegung des gesamten Werkzeugs das Gewinde gefertigt wird.

Der Bohrgewindefräser gemäß WO 2004/022274 A1 soll für Stahl geeignet sein und ist dazu mit kernlocherzeugenden Schneiden in einem Bohrbereich und gewindeerzeugenden Schneiden in einem sich axial anschließenden Gewindefräsbereich ausgestattet. Die gewindeerzeugenden Schneiden sind die in ihren radialen Abmessungen um 3 % kleiner als die kernlocherzeugenden Schneiden. Somit ist die absolute radiale Abstandsdifferenz zwischen den kernlocherzeugenden Schneiden und den gewindeerzeugenden Schneiden abhängig von dem Durchmesser des Bohrgewindefräsers. Bei einem typischen Durchmesser eines Bohrgewindefräsers von etwa 8 mm beträgt also die radiale Abstandsdifferenz zwischen den kernlocherzeugenden Schneiden und den gewindeerzeugenden Schneiden etwa 0,24 mm oder 240 µm. Es sind zwei um 180° versetzt zueinander angeordnete Bohrnuten vorgesehen, an deren Stirnseite sich die kernlocherzeugenden Schneiden oder Bohrschneiden befinden und an denen sich in der axialen Verlängerung eine erste axiale Reihe von gewindeerzeugenden Zähnen oder Schneiden anschließt. Ferner sind zwischen den beiden Bohrnuten um etwa 90° versetzt zwei kleinere Fräsnuten vorgesehen, an denen sich jeweils zusätzliche axiale Reihen von Frässchneiden oder Fräszähne als zusätzliche gewindeerzeugende Schneiden befinden. Die ersten Reihen von gewindeerzeugenden Schneiden an den Bohrnuten sind radial zurückversetzt oder gegenüber der Bohrnut abgesenkt, jeweils um den Einfluss des Bohrspanes, der durch die Bohrnut abgeführt wird, auf diese gewindeerzeugenden Schneiden an der Bohrnut zu verringern. Die Spannuten verkleinern sich von der Spitze des Werkzeugs zum Bohrerschaft hin, wodurch der Bohrgewindefräser in seiner seitlichen Steifigkeit verstärkt wird. Der Seelendurchmesser an den Spannuten wird also von der Spitze zum Schaft hin vergrößert.

Die Druckschriften US 4,651,374 A und US 4,761,844 A beschreiben übereinstimmend (FIG 1 bis 4) einen Bohrgewindefräser mit vier Spannuten, die um 90° zueinander versetzt sind und einen gleichen Querschnitt und gleiches Volumen zueinander und über ihre gesamte Länge axial zur Werkzeugachse aufweisen. An zwei um 180° zueinander versetzten Nuten sind an der Spitze des Werkzeugs Bohrstirnschneiden vorgesehen, die in einer Bohrspitze zulaufen, und axial anschließend an die Bohrstirnschneiden sind Gewindefrässchneiden in Form von Zahnreihen an diesen Bohrspannuten angeordnet. An den anderen beiden Spannuten sind keine Bohrschneiden vorgesehen, sondern nur als axiale Zahnreihen ausgebildete Gewindefrässchneiden. Diese weiteren Spannuten dienen also lediglich als Frässpannuten. Die Fräszähne sind auf senkrecht zur Werkzeugachse angeordneten Ringsegmenten ausgebildet. Zentral durch den Werkzeugschaft und den Gewindefräsbereich verläuft ein Kühlmittelkanal, der sich im Bohrbereich aufzweigt in vier Teilkanäle, die an der Bohrspitze in den Zahnstegen, an denen sich die Gewindefräszähne befinden, münden. Der Gewindefräsbereich mit seinen Gewindefrässchneiden oder Gewindefräszähnen weist einen gleichmäßigen maximalen Durchmesser auf, der gleich ist zu dem maximalen Durchmesser des Bohrbereiches, so dass der Gewindefräsbereich in die Bohrung, die der Bohrbereich erzeugt hat, ohne Störungen eingeführt werden kann.

Die US 4,761,844 A offenbart zusätzlich zur US 4,651,374 A weitere Ausführungsformen von Bohrgewindefräsern (FIG 5 bis FIG 12), bei denen nur zwei Spannuten vorgesehen sind, an denen sich sowohl Bohrschneiden als auch im Anschluss daran Gewindefrässchneiden als Zahnreihen befinden. Dabei ist neben einem Bohrbereich zum Erzeugen der Bohrungen auch noch ein Stirnfräsbereich offenbart sowie auch ein Bohrbereich mit einer zentralen Ausnehmung. Die Gewindefrässchneiden des Gewindefräsbereiches haben wieder einen maximalen Durchmesser, der gleich groß oder nicht größer ist als der maximale Durchmesser des bohrungserzeugenden Bereiches, so dass der Gewindefräsbereich ohne Störungen in die Bohrung, die durch den bohrungserzeugenden Bereich erzeugt wurde, eingeführt werden kann. Zusätzlich ist eine Senkphase zwischen dem Gewindefräsbereich und dem Schaft vorgesehen. Auch die zwei Spannuten in dieser weiteren Ausführungsform weisen den gleichen Querschnitt und das gleiche Volumen über die gesamte Länge des Arbeitsbereiches auf.

Die Teilungswinkel zwischen in Drehrichtung aufeinanderfolgenden Frässchneiden betragen bei dem Bohrgewindefräser gemäß WO 2004/022274 A1 beträgt zwischen einer Frässchneide an der Bohrnut und einer in Drehrichtung vorausgehenden Frässchneide an einer Fräsnut einen Winkel größer 90°, der gemäß der Zeichnung bei etwa 103° liegt und zu der in Drehrichtung nachfolgenden Frässchneide entsprechend den komplementären Winkel von 77°. Bei dem Bohrgewindefräser gemäß US 4,651,374 A und US 4,761,844 A sind die Teilungswinkel konstant gleich 90° bzw. 180°, ist also eine gleiche Teilung verwirklicht.

Während Bohrgewindefräser der vorbekannten Art kurzspanendes Material, wie beispielsweise Graugussmaterial und Messing, meist gut verarbeiten können, kommt es zu Problemen, wenn langspanendes Material, wie beispielsweise Stahl, zu bearbeiten ist. Dann nämlich geraten die langen Späne bei Bohren in die Gewindefräsbereiche des Werkzeugs, so dass diese beschädigt bzw. zerstört werden können.

Des weiteren hat es sich bei Versuchen der Anmelderin herausgestellt, dass die vorbekannten Bohrgewindefräser der eingangs genannten Art relativ bruchgefährdet sind, insbesondere wenn langspanendes und/oder hochfestes Material wie Stähle bearbeitet wird.

Die bekannten Bohrgewindefräser weisen darüber hinaus auch, solange sie funktionsbereit sind, eine relativ geringe Zerspanleistung auf.

Der Erfindung liegt nun die Aufgabe zugrunde, einen Bohrgewindefräser der eingangs genannten Art weiterzubilden.

Eine Lösung dieser Aufgabe gemäß der Erfindung ergibt sich aus den Merkmalen des Patentanspruchs 1. Vorteilhafte Ausgestaltungen und Weiterbildungen ergeben sich aus den vom Patentanspruch 1 abhängigen Patentansprüchen.

Der Bohrgewindefräser ist um eine Achse wenigstens in einer Drehrichtung (Schneidrichtung) drehbar und weist einerseits einen Bohrbereich mit wenigstens einer Bohrschneide zum Erzeugen einer Bohrung in einem Werkstück und andererseits einen Gewindefräsbereich mit wenigstens einer Frässchneide zum anschließenden Fräsen eines Gewindes in der Bohrung des Werkstücks auf. Gemäß der Erfindung sind mehr als doppelt so viele Frässchneiden wie Bohrschneiden in Drehrichtung oder am Umfang des Werkzeugs vorgesehen. Dadurch lässt sich eine höhere Frässchneidleistung erzielen als beim Stand der Technik, zumal da die Abtragleistung beim Gewindefräsen grundsätzlich geringer ist als beim Bohren.

Vorzugsweise sind sechs Frässchneiden und zwei Bohrschneiden, wobei dann vorzugsweise zwischen zwei Bohrspanräumen jeweils wenigstens zwei Frässpanräume mit zugehörigen Frässchneiden angeordnet sind.

Eine weitere, mit den weiteren Lösungen kombinierbare, jedoch auch unabhängig beanspruchte Lösung schlägt einen Bohrgewindefräser vor, bei dem zumindest ein Teil der Bohrschneide(n) zumindest abschnittsweise einen negativen Spanwinkel aufweist, wobei der Spanwinkel abhängig von dem Werkstoff des Werkstücks gewählt ist und im Allgemeinen zwischen -0,1° und -25° und vorzugsweise zwischen -1° und -15° gewählt ist. Mit dem negativen Spanwinkel lässt sich im Gegensatz zum genannten Stand der Technik auch ein hochfester Werkstoff wie Stahl mit dem Bohrgewindefräser bearbeiten.

In einer vorteilhaften Weiterbildung, die auch unabhängig von Patentanspruch 1 beansprucht werden kann, ragen die Bohrschneiden radial von der Achse um eine vorgegebene positive (größer Null) radiale Abstandsdifferenz weiter nach außen als die Frässchneide(n) und diese vorgegebene radiale Abstandsdifferenz zwischen den Bohrschneiden und den Frässchneiden ist nun so eingestellt, dass beim Bohren entstehende Späne auch bei langspanenden Werkstoffen wie Stählen im Wesentlichen nicht zwischen die Frässchneide(n) und die Wandung der vom Bohrbereich erzeugten Bohrung eingeklemmt werden und zugleich die Frässchneide(n) beim Bohren nicht in das Werkstück eingreift oder eingreifen und/oder dass die vorgegebene Abstandsdifferenz einen Wert aus einem Bereich von 0,005 mm bis 0,03 mm, vorzugsweise von 0,01 mm bis 0,025 mm, annimmt.

Im Unterschied dazu wird bei WO 2004/022274 A1 mit den angegebenen 3 % eine wesentlich größere und darüber hinaus mit zunehmendem Werkzeugdurchmesser zunehmende Abstandsdifferenz für das radiale Zurücksetzen der Frässchneiden gegenüber den Bohrschneiden vorgeschlagen. Dieser große Abstand führt aber, wie erst umfangreiche Versuche der Anmelderin zeigten, zu einem Einklemmen von aus dem Bohrvorgang stammenden Spänen zwischen den Frässchneiden und der durch die Bohrschneiden gefertigten Bohrung insbesondere bei langspanendem Werkstückmaterial wie Stahl und dadurch zu einer baldigen Zerstörung des Werkzeugs.

Bei den in US 4,651,374 A oder US 4,761,844 A vorgeschlagenen Bohrgewindefräsern ist das Augenmerk ausschließlich auf das Verhindern einer Beeinträchtigung der Gewindefrässchneiden beim Bohren gerichtet und die Gewindefrässchneiden sind deshalb in ihren radialen Abmessungen genauso groß wie die Bohrschneiden ausgebildet. Ein Hinweis auf die Problematik des Festklemmens von Bohrspänen bei langspanenden Werkstoffen findet sich auch in diesen Druckschriften nicht. Zwar würden bei einer solchen Auslegung mit radial gleich großen Gewindefrässchneiden und Bohrschneiden keine Bohrspäne zwischen die Frässchneiden und die Bohrungswand eingeklemmt, jedoch sind diese bekannten Werkzeuge dennoch ungeeignet für langspanende Werkstoffe wie Stahl.

In einer weiteren Lösung der gestellten Aufgabe, die auch unabhängig vom Patentanspruch 1 beansprucht werden kann, befinden sich axial zur Achse des Bohrgewindefräsers im Anschluss an wenigstens eine Bohrschneide des Bohrbereiches jeweils wenigstens eine zugehörige Frässchneide des Gewindefräsbereiches an einem zugehörigen gemeinsamen Bohrspanraum (Bohrspannut) zum Abführen der von der Bohrschneide erzeugten Bohrspäne, die vorzugsweise aus dem Abführen der von den Frässchneiden erzeugten Frässpäne vorgesehen ist. Es ist nun eine Vergrößerung des Bohrspanraumes in der Förderrichtung oder in der axialen Richtung von dem Bohrbereich über den Gewindefräsbereich vorgesehen, in dem der Durchmesser jedes Bohrspanraumes an dem der Achse am nächsten liegenden oder innersten Punkt in axialer Erstreckung abnimmt oder das Volumen jedes Bohrspanraumes in dieser axialen Erstreckung zunimmt. Damit können auch die langen Späne eines langspanenden und zugleich recht elastischen Werkstoffes wie Stahl in verbesserter Weise abgeführt werden, da das Aufrollen oder Entformen der Späne in der Nut durch deren axiale Vergrößerung teilweise kompensiert werden kann.

In einer weiteren Lösung der gestellten Aufgabe, die auch unabhängig von Patentanspruch 1 beanspruchbar ist, weist zumindest eine Bohrschneide, vorzugsweise jede Bohrhauptschneide, eine definierte Verrundung an ihrer Schneidkante auf. Dadurch kann ein besseres Spanbrechverhalten erzielt werden, so dass auch langspanende Werkstoffe besser bearbeitet werden können, und/oder die Schneide stabilisiert werden, was besonders bei hochfesten und harten Werkstoffen wie Stahl vorteilhaft ist.

In einer Ausgestaltung bilden die Spanflächen von in Achsrichtung benachbarten Frässchneiden oder Fräszähnen im Wesentlichen eine stetig ausgebildete Fläche bilden, die vorzugsweise eben oder auch gekrümmt ist. Vorbekannte Bohrgewindefräser weisen - werden die Spanflächen von der Seite aus, also senkrecht zur Oberflächennormalen betrachtet - einen treppenstufenförmigen Verlauf auf, der sich als nachteilig beim Fräsvorgang herausgestellt hat. Der Vorschlag behebt diesen Nachteil. Die Fräszähne reichen unmittelbar bis an die Spannut mit kontinuierlicher Spanfläche.

Die Teilung der Frässchneiden kann ungleich sein, derart dass zwei Frässchneiden, von denen die vordere an einem Bohrspanraum liegt, in einem Winkel von höchstens 88°, insbesondere zwischen 62° und 88°; besonders bevorzugt zwischen 82° und 85° oder zwischen 72° und 78°, insbesondere 75°, aufeinander folgen.

Ferner können sich die Gewindestege mit den Frässchneiden nach hinten, beispielsweise konisch, verjüngen, indem die radialen Abstände der Frässchneiden in jeder axialen Reihe oder der Außenradius des Gewindefräsbereichs von der Achse in Richtung vom Bohrbereich weg abnimmt, insbesondere um 0,15 % bis 1 %, bevorzugt um 0,15 % bis 0,5 % und vorzugsweise bei etwa 0,2 %, jeweils über die axiale Länge. Durch die Verjüngung wird die radiale Abdrängung des Werkzeugs kompensiert, die bei Stählen besonders groß ist.

Die Begrenzungsfläche zumindest eines Spanaufnahmeraums verläuft bevorzugt - in axiale Richtung betrachtet - zumindest abschnittsweise kreisförmig oder ellipsenförmig. Auch ein parabelförmiger oder hyperbelförmiger Verlauf ist möglich. Die Begrenzungsfläche zumindest eines Spanaufnahmeraums kann - in axiale Richtung betrachtet - zu einer radial durch die Achse verlaufenden Linie symmetrisch oder asymmetrisch ausgebildet sein. Dabei ist für kurzspanende Werkstoffe, wie beispielsweise Grauguss, ein symmetrischer Verlauf bevorzugt, während bei langspanenden Werkstoffen, wie beispielsweise Stahl, die einen längeren, sich einrollenden Span erzeugen, meist der asymmetrische Verlauf gewählt wird.

Alle Frässchneiden können als linear oder spiralig (gedrallt) verlaufende Zahnstege ausgebildet sein. Die in Werkzeugdrehrichtung der einen Frässchneide nachfolgende andere Frässchneide eines Schneidpaars kann an der Stirnseite des Schafts um einen vorgegebenen Betrag in axiale Richtung zurückversetzt sein. Die nachfolgenden Zahnstege sind hiernach axial zurückgesetzt, was z. B. durch den Kegelmantelanschliff der Stirnseite des Bohrgewindefräsers erfolgen kann. Durch das Zurücksetzen der nachfolgenden Zahnstege wird auch sichergestellt, dass beim Bohren das Kühlschmiermittel, das im Stirnbereich der Fräsnut austritt, in ausreichendem Maße in die Bohrnut gelangt.

Im Bereich der Stirnseite des Arbeitsbereichs des Werkzeugs kann eine Austrittsöffnung für Kühlschmiermittel angeordnet sein.

Die Spanaufnahmeräume können eine rechtsverlaufende oder eine linksverlaufende Spiralnut bilden. Das Werkzeug wird dadurch für links- oder rechtsschneidenden Einsatz geeignet. Möglich ist es weiterhin, dass eine geradegenutete Ausführung vorgesehen wird.

Zur Standzeiterhöhung kann zumindest für einen Teil der Frässchneiden eine Beschichtung mit Hartstoff vorgesehen werden. Bevorzugt ist der Hartstoff Titan-Aluminium-Nitrid (TiAIN).

Um die Bohrung ansenken zu können, sieht eine Weiterbildung vor, dass am von der Stirnseite entfernten Ende des Schaftes des Bohrgewindefräsers ein Senkabschnitt angeordnet ist. Der Senkabschnitt weist dabei vorzugsweise eine Schneidkante auf, die unter 45° zur Achse des Bohrgewindefräsers angeordnet ist.

Die genannten Vorschläge führen jeweils zu einem verbesserten Bohrgewindefräswerkzeug, mit dem erstmalig auch die Zerspanung von langspanendem Material wie Stahl möglich ist. Insbesondere wird ein Bohrgewindefräser geschaffen, der sich durch verbessertes Spanbrechverhalten auszeichnet, so dass sowohl kurz- als auch langspanendes Material gut verarbeitet werden kann. Die Standzeit des Werkzeugs ist damit relativ hoch, so dass der Fräser wirtschaftlich eingesetzt werden kann.

In der Zeichnung ist ein Ausführungsbeispiel der Erfindung dargestellt. Es zeigen jeweils in einer schematischen Darstellung:
- FIG 1: den unteren Abschnitt eines Bohrgewindefräsers in einer perspektivischen Seitenansicht,
- FIG 2: der Bohrgewindefräser gemäß FIG 1 in einer Stirnansicht und
- FIG 3: ein Teil eines Bohrgewindefräsers gemäß FIG 1 und 2 in einem Längsschnitt.

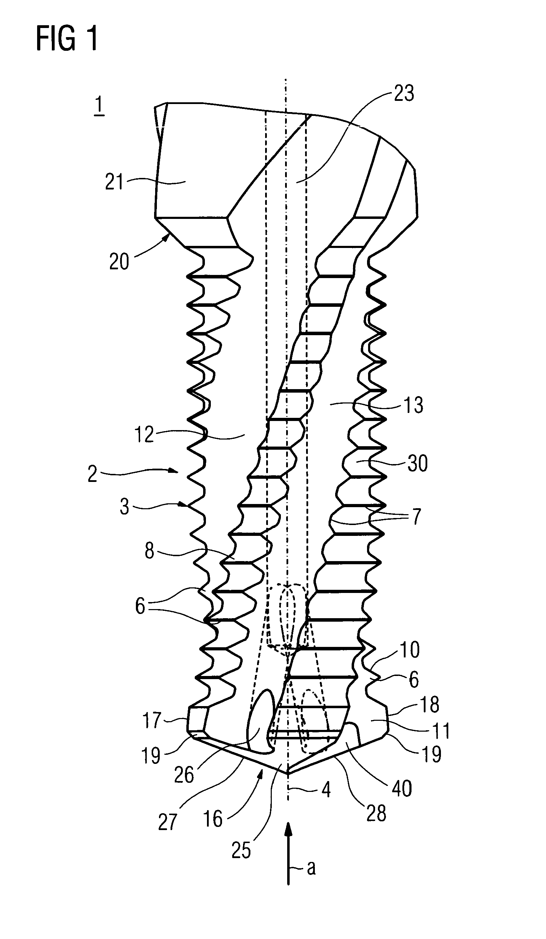

Einander entsprechende Teile und Größen sind in den FIG 1 bis 3 mit denselben Bezugszeichen versehen

In FIG 1 bis 3 ist ein Bohrgewindefräser 1 skizziert, der einen, insbesondere zylindrischen, Schaft 21 aufweist für die Werkzeugaufnahme in einer Werkzeugmaschine. An dem unteren Ende des Schaftes 21 ist ein im Durchmesser reduzierter Arbeitsbereich (Zerspanungsteil) 2, insbesondere einstückig oder durch Anbringen wenigstens eines vorgefertigten Teils, ausgebildet. Das Werkzeug oder der Bohrgewindefräser 1 rotiert bei seinem Einsatz um seine Achse 4, die durch den Schaft 21 und den Arbeitbereich 2 verläuft und im Allgemeinen eine Längsachse und/oder eine Hauptträgheitsachse ist, im Drehsinn 15, im vorliegenden Fall im Uhrzeigersinn oder rechtsdrehend (rechtsschneidend).

Der Arbeitsbereich 2 weist an seinem Ende einen Bohrbereich 40 zum Erzeugen einer Bohrung (eines Loches oder einer Ausnehmung) in einem Werkstück und an einem im Wesentlichen zylindrisch ausgebildeten Umfang (oder: Einhüllende) 3 einen axial bezüglich der Achse 4 versetzt zum Bohrbereich 40 angeordneten Gewindefräsbereich 30 zum Erzeugen eines Gewindes in der von dem Bohrbereich 40 erzeugten Bohrung durch Gewindefräsen auf.

Im Bohrbereich 40 sind an der Stirnseite 16 zwei annähernd um 180° versetzte Bohrhauptschneiden 27 und 28 vorgesehen, die schräg zur Achse 4 nach vorne in einer Bohrerspitze 25 zulaufen sowie zwei sich an die Bohrhauptschneiden 27 und 28 jeweils über eine unter einem Winkel β von 45° verlaufende Fase 19 anschließende Bohrmantelschneiden 17 und 18. Die Fase 19 ist vorteilhaft bei der Bearbeitung von Graugusseisenwerkstoffen, kann insbesondere auch bei anderen Werkstoffen aber auch entfallen.

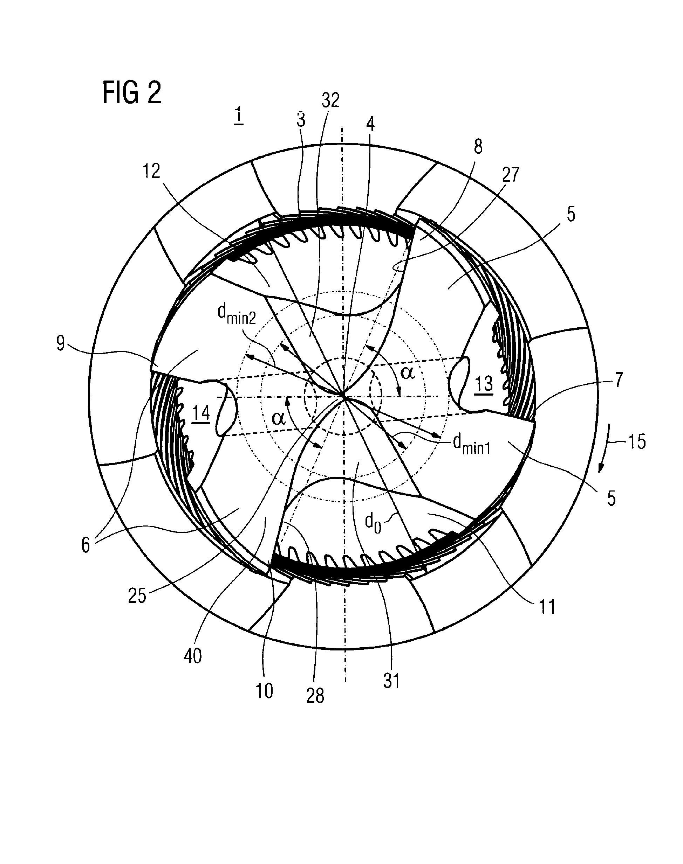

Wie am besten in FIG 2 gesehen werden kann, weist der Bohrgewindefräser 1 im Gewindefräsbereich 30 zwei Frässchneidenpaare 5 und 6 auf, die jeweils aus zwei Frässchneiden 7 und 8 bzw. 9 und 10 bestehen. Die beiden Frässchneiden 7 und 8 bzw. 9 und 10 haben einen Winkelabstand, der kleiner 90° ist, vorzugsweise maximal 88° beträgt, d. h. die in Werkzeugdrehrichtung (Schnittrichtung) 15 nachfolgende Frässchneide 8 bzw. 10 folgt der vorausgehenden Frässchneide 7 bzw. 9 nach einem Winkel *α* von maximal 88°. Bevorzugte Werte für den Winkel *α* liegen zwischen 62° und 88°, wobei besonders bevorzugt ein Wert von 75° vorgesehen ist.

Dadurch ergibt sich beim Gewindefräsen eine Spandickenaufteilung. Durch die ungleiche Winkelaufteilung der Frässchneiden wird ein ruhiger Lauf, eine geringe Ratterneigung und eine bessere Oberflächenqualität im gefertigten Gewinde erreicht.

Zwischen den Frässchneiden 7 und 10 einerseits und 8 und 9 andererseits verschiedener Frässchneidenpaare 5 und 6 befindet sich jeweils ein Spanaufnahmeraum 11 bzw. 12. Ferner befindet sich zwischen den Frässchneiden 7 und 8 bzw. 9 und 10 gleicher Frässchneidenpaare 5 und 6 ebenfalls jeweils ein zusätzlicher Spanraum 13 und 14.

Der Spanraum 12 setzt sich vorne bis zu der Bohrmantelschneide 17 und der Bohrhauptschneide 27 und der Spanraum 11 bis zu der Bohrmantelschneide 18 und der Bohrhauptschneide 28 fort und bildet dort die Spanfläche für die beim Bohren entstehenden Späne des Werkstückmaterials. Die beiden Spanräume 11 und 12 sind relativ groß oder großvolumig ausgebildet, um die während des Bohrvorgangs anfallenden vergleichsweise großen Späne abzutransportieren.

Die Spanaufnahmeräume 13 und 14 führen zusammen mit den Spanräumen 11 und 12 während des Gewindefräsens die Späne ab. Da die Spanaufnahmeräume 13, 14 nur beim Gewindefräsen zur Späneförderung dienen, nicht jedoch beim Bohren, müssen diese nur die kleineren Frässpäne aufnehmen und können daher kleiner ausgebildet sein.

Die Spanräume 11 und 12 werden hinsichtlich ihrer Größe maßgeblich durch den Durchmesser dₘᵢₙ₁ bestimmt, der den der Achse 4 nächstkommenden Punkt der Spanräume 11 und 12 definiert, der auch als Seelendurchmesser bezeichnet wird und dem doppelten Radius oder radialen Abstand von der Achse 4 entspricht. Der Durchmesser dₘᵢₙ₁ beträgt insbesondere zwischen 27 % und 50 % des Außendurchmessers do des Fräsbereichs 30, besonders bevorzugt 43 %.

Die kleineren Spanräume 13 und 14 werden größenmäßig maßgeblich durch den Durchmesser dₘᵢₙ₂ bestimmt, der den der Achse 4 nächstkommenden Punkt dieser Spanräume 13, 14 definiert (Seelendurchmesser). Für den Durchmesser dₘᵢₙ₂ sind Werte zwischen 42 % und 75 % des Außendurchmessers do des Schafts 2 vorgesehen, wobei ein Wert von 60 % bevorzugt ist.

Die Spanräume 11 bis 14 sind als, beispielsweise eingeschliffene, Spannuten zum Abführen von Spänen vorgesehen und im dargestellten Ausführungsbeispiel gedrallt ausgebildet, also mit einer Drehung oder spiraligen Ausbildung um die Achse 4, können aber auch gerade, d.h. parallel zur Achse 4 verlaufen. Die mit den Wänden der Spanräume 11 bis 14 jeweils gebildeten Spanflächen an den zugehörigen Bohr- oder Frässchneiden können eben oder auch gekrümmt ausgebildet sein.

An dem Bohrbereich 40 kann eine Ausspitzung 31 und 32 zumindest in den den Bohrschneiden zugeordneten Spanräumen 11 und 12 vorgesehen sein, also eine zusätzlich Anschrägung, die flacher zur Bohrspitze 26 hin verläuft als die restliche Nut. Die entsprechende Ausspitzung der Bohrstirnschneide oder Bohrhauptschneiden 27 und 28 ist großvolumig ausgelegt, um eine ungehinderte Bohrspanabführung zu gewährleisten.

Die Bewegung des Bohrgewindefräsers 1 beim Bohren umfasst einen zur Achse 4 axialen linearen Vorschub in das Werkstück hinein entgegen dem mit a bezeichneten Pfeil und gleichzeitiger Drehung um die Achse 4 im Drehsinn 15, wobei die Bohrschneiden 17 und 18 und 27 und 28 des Bohrbereichs 40 kontinuierlich im schneidenden Eingriff im Werkstück sind.

Das Bohren erfolgt gemäß FIG 1 bis 3 zweinutig und die Bohrspäne werden über die beiden Spanaufnahmeräume 11 und 12 abgeführt.

Beim sich anschließenden Gewindefräsen wird der Bohrgewindefräser 1 je nach Auslegung und zu erzeugendem Gewindesinn (Linksgewinde oder Rechtsgewinde) in einer überlagerten helixartigen Bewegung aus linearem Vorschub axial zur Achse 4, vorzugsweise aus dem Werkstück heraus (Rückholbewegung) in der Richtung a, einerseits und einer Drehung (Zirkularbewegung) der Achse 4 um eine zentrale Achse des zu erzeugenden Gewindes unter gleichzeitiger Drehung um die Achse 4 mit größerer Rotationsgeschwindigkeit als die Zirkularbewegung bewegt.

Beim Gewindefräsen kommen gemäß FIG 1 bis 3 alle vier Frässchneiden 7, 8, 9, 10 des Gewindefräsbereichs 30 zum Einsatz bei diskontinuierlichem Eingriff ins Werkstück und es wird viernutig gefräst.

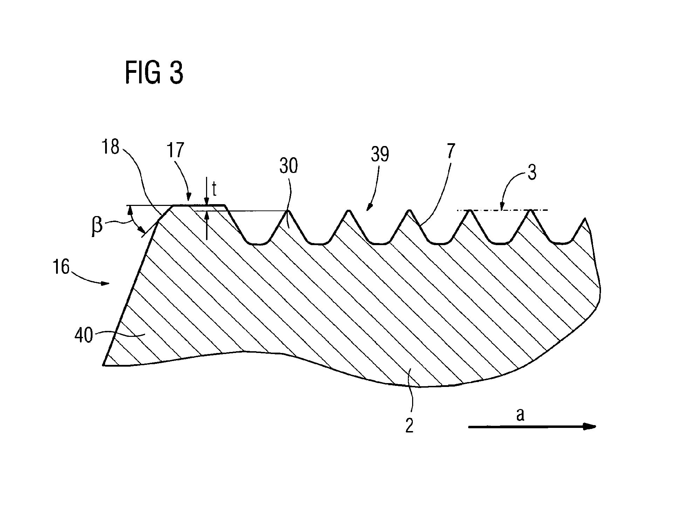

Aus FIG 1 und 3 ist zu erkennen, dass über den Gewindefräsbereich 30 axial zur Achse 4 gerade oder gedrallt versetzt mehrere Frässchneiden, z.B. 7, als Fräszähne eines Gewindeschneidprofils 19 angeordnet sind zum parallelen Erzeugen mehrerer Gewindegänge des Gewindes. Die Fräszähne oder Frässchneiden 7 bis 10 sind dabei jeweils in Gruppen zu vier auf einer Höhe oder einer Ebene axial angeordnet, wobei der axiale Abstand der Zahngruppen der Gewindesteigung entspricht. Die Zahl der Zahngruppen entspricht der Zahl der zu erzeugenden Gewindegänge, so dass eine bis eineinhalb Umdrehungen des Werkzeugs bei der Zirkularbewegung zur Erzeugung eines vollständigen Gewindes ausreicht. Es kann aber grundsätzlich auch eine kleinere Anzahl von Fräszähnen in axialer Richtung oder von Zahngruppen vorgesehen sein, wobei die geringere Anzahl durch eine Erhöhung der Zahl der Umläufe des Bohrgewindefräsers 1 beim Gewindefräsen ausgeglichen wird.

Die in axiale Richtung a aufeinanderfolgenden einzelnen Frässchneiden oder Zähne der einzelnen Frässchneiden 7, 8, 9, 10 bilden, wie es am besten aus FIG 2 gesehen werden kann, eine gemeinsame Fläche zum Spanraum hin (Spanfläche), die im Allgemeinen stetig, d.h. kontinuierlich ohne Stufen und/oder zumindest weitgehend eben oder auch gekrümmt ausgebildet ist.

Es sind also, mit anderen Worten, primäre Zahnstege und sekundäre Zahnstege gebildet, von denen jeweils die Vorderseite (Spanfläche) der primären Zahnstege und die Rückseite der sekundären Zahnstege die Bohrnuten und die Rückseiten der primären Zahnstege und die Vorderseiten (Spanflächen) der sekundären Zahnstege die Fräsnuten. Die sekundären Zahnstege sind jeweils an der Stirn gegenüber den primären Zahnstegen axial nach hinten zurückgesetzt. Dies kann z. B. bereits durch den Kegelmantelanschliff der Bohrerstirnschneide erfolgen. Durch das Zurücksetzen der sekundären Zahnstege wird sichergestellt, dass beim Bohren das Kühl- und oder Schmiermittel, welches im Stirnbereich der Fräsnut austritt, in ausreichendem Maße in die Bohrnut gelangt.

In den Figuren nicht näher zu sehen ist, dass sich die Frässchneiden 7, 8, 9 und 10 in Achsrichtung a (geringfügig) verjüngen (können). Dasselbe gilt für die Seelendurchmesser dₘᵢₙ₁ der Spanräume 11 und 12 und gegebenenfalls auch dₘᵢₙ₂ der Spanräume 13 und 14, die ebenfalls verjüngt über die Achse 4 ausgebildet sein können.

Bezogen auf die Gewindelänge oder die Länge des Gewindefräsbereiches 30 in axialer Richtung wird die Verjüngungen der Frässchneiden oder des Außendurchmessers des Gewindefräsbereiches 30 bei weniger festen Werkstoffen wie beispielsweise Graugusseisenwerkstoffe (GG) in einem Bereich von 0,15 % gewählt, das heißt, bei einer Gewindelänge von 15 mm wäre der Unterschied oder die Differenz zwischen den Außendurchmessern am zur Stirnseite hin befindlichen Ende des Gewindefräsbereiches 30 einerseits und am zum Schaft 21 hin gerichteten Ende des Gewindefräsbereiches 30 andererseits 0,0225 mm (oder 22,5 µm). Bei hochfesten Werkstoffen, insbesondere bei Stählen, wird dagegen die Verjüngung größer gewählt, insbesondere in einem Bereich zwischen 0,15 % und 1 %, insbesondere in einem Bereich zwischen 0,15 % und 0,5 % und vorzugsweise bei etwa 0,2 %. Diese Verjüngung kompensiert die radiale Abdrängung des Werkzeuges, die bei einem hochfesten Werkstoff größer ist als bei einem weniger festen Werkstoff.

Die Verjüngung des Seelendurchmessers führt zu einer Vergrößerung der Volumina der Spanräume 11 und 12, die beim Bohren wirksam sind, und ermöglicht dabei bei langspanenden Werkstoffen eine verbesserte Spanabfuhr. Dies gilt insbesondere bei Stählen, bei denen durch die Elastizität der Bohrspäne sich diese nach dem Abtragen und Umformen oder Einrollen am Stirnbereich im Verlauf der Spurnuten 11 und 12 beim Abführen wieder aufdehnen oder teilweise aufrollen und bei denen somit die Volumenvergrößerung der Spannuten diese Aufdehnung der Späne teilweise kompensiert und mehr Platz für die Bohrspäne schafft. Die Verjüngung oder Abnahme des Seelendurchmessers dₘᵢₙ₁ der Bohrspanräume 11 und 12 wird insbesondere in einem Bereich von 0,01 mm bis 0,3 mm bezogen auf eine axiale Länge von 10 mm gewählt, das heißt, eine prozentuale Differenz oder Abnahme oder Verjüngung von 0,1 % bis 3 % bezogen auf den Innendurchmesser (oder: den Nutgrund oder die tiefste Stelle der Bohrnuten) und über die axiale Länge der Bohrnuten.

Die Frässpanräume 13 und 14 bleiben vorzugsweise in ihrem Querschnitt und ihrem Seelendurchmesser dₘᵢₙ₂ konstant über die axiale Länge.

Am von der Stirnseite 16 abgewandten Ende des Arbeitsbereichs 2 am Übergang zum Schaft 21 befindet sich ein Senkabschnitt 20, der beispielsweise unter 45° angeordnet ist und die gefertigte Bohrung ansenken kann.

Nicht dargestellt ist, dass der Bohrgewindefräser 1 zum Entfernen eines unvollständigen Gewindegangs einen hinterschliffenen zylindrischen Teil oder Abschnitt am Ende der Frässchneiden haben kann.

Wie weiter, insbesondere in FIG 3, gesehen werden kann, erstrecken sich die einzelnen Frässchneiden 7, 8, 9, 10 für das Fräsen sowie die Bohrmantelschneiden 17 und 18 für das Bohren im wesentlichen bis zum selben Durchmesser, d. h. bis zum Umfang 3 des Arbeitsbereichs 2, vorzugsweise jedoch um einen vorgegebene radiale Abstandsdifferenz t von der Achse 4, die aus einem Intervall von 0,01 mm (oder 10 µm) und 0,03 mm (oder 30 µm) gewählt ist, weniger weit nach außen. Der maximale radiale Abstand der Frässchneiden 7, 8, 9 und 10 und damit des gesamten Gewindefräsbereichs 30 von der Achse 4 ist also um die vorgegebene radiale Abstandsdifferenz t kleiner als der maximale radiale Abstand der Bohrmantelschneiden 17 und 18 und damit des gesamten Bohrbereichs 40. Mit dieser Wahl der vorgegebenen radiale Abstandsdifferenz t wird verhindert, dass Späne zwischen den Frässchneiden 7, 8, 9, 10 und der von den Bohrmantelschneiden 17 und 18 hergestellten Bohrungsinnenwand eingeklemmt werden, was sonst zu einem Bruch des Werkzeugs führen könnte.

Mit Vorteil ist ferner vorgesehen, dass zumindest die Bohrhauptschneiden und/oder die Frässchneiden eine Schneidkantenverrundung aufweist. Die Schneidkantenverrundung an den Bohrschneiden wird dabei in Abhängigkeit vom zu zerspanenden Material größer oder kleiner gewählt und kann durch Bürsten oder Sandstrahlen und ggf. vorherigen Anschnitt erzeugt werden. Die Verrundung soll einerseits die Bohrerhauptschneide stabilisieren und andererseits die Spanbrechung unterstützen. Mit dieser Ausgestaltung wird das Spanbrechverhalten des Bohrgewindefräsers sehr positiv beeinflusst, so dass es zu einem günstigen Brechen langer Späne kommt, so dass diese sich nicht in den Spannuten festsetzen können. Hierdurch wird eine Beschädigung des Werkzeugs verhindert bzw. zumindest erschwert.

Weiterhin können die Schneiden einen auslaufenden Rand zum Außendurchmesser aufweisen, also etwas gekrümmt oder verrundet verlaufen. Dies hat eine verbesserte Spanabfuhr zur Folge.

Aus der Zusammenschau der FIG 1 und 2 geht hervor, wie die Versorgung mit Kühl- und/oder Schmiermittel ausgeführt werden kann. Es ist ein zentraler Kühl- und/oder Schmiermittelkanal (Kühl- und/oder Schmiermittelbohrung) 23 koaxial zur Achse 4 in den Schaft 21 und den Arbeitbereich 2 eingearbeitet, der sich an seinem Ende in zwei Teilkanäle aufzweigt, die in jeweils einer Auslassöffnung 26 in jeweils einem der kleineren Spanräume 13 und 14 an deren stirnseitigen Enden münden. Entsprechend kann natürlich auch vorgesehen werden, dass der Austritt von Kühl- und/oder Schmiermittel in die Spanaufnahmeräume 11 bzw. 12 erfolgt.

### Bezugszeichenliste

- 1: Bohrgewindefräser
- 2: Arbeitsbereich
- 3: Umfang
- 4: Achse
- 5: Frässchneidenpaar
- 6: Frässchneidenpaar
- 7: Frässchneide
- 8: Frässchneide
- 9: Frässchneide
- 10: Frässchneide
- 11, 12: Bohrspanraum
- 13, 14: Frässpanraum
- 15: Werkzeugdrehrichtung
- 16: Stirnseite
- 17, 18: Bohrmantelschneide
- 19: Fase
- 20: Senkabschnitt
- 21: Schaft
- 22: Fläche
- 23: Kühlmittelkanal
- 25: Bohrspitze
- 26: Auslassöffnung
- 27, 28: Bohrhauptschneide
- 30: Gewindefräsbereich
- 31, 32: Ausspitzung
- 39: Gewindeschneidprofil
- 40: Bohrbereich

- α: Winkel
- β: Winkel
- dₘᵢₙ₁: Durchmesser
- dₘᵢₙ₂: Durchmesser
- do: Außendurchmesser
- a: axiale Richtung
- t: Abstandsdifferenz

## Patentansprüche

1. Bohrgewindefräser (1)
a) der um eine Achse (4) wenigstens in einer Drehrichtung (15) drehbar ist und
b) einen Bohrbereich (40) mit wenigstens einer Bohrschneide (17, 18, 27, 28) zum Erzeugen einer Bohrung in einem Werkstück und
c) einen Gewindefräsbereich (30) mit wenigstens einer Frässchneide (7, 8, 9, 10) zum anschließendem Fräsen eines Gewindes in der Bohrung des Werkstücks aufweist,
**dadurch gekennzeichnet**,
d) dass in Drehrichtung eine um einen Faktor größer 2 größere Anzahl Frässchneiden (7, 8, 9, 10) als Bohrschneiden (17) angeordnet oder wirksam sind.

2. Bohrgewindefräser nach Anspruch 1, bei dem in Drehrichtung sechs Frässchneiden und zwei Bohrschneiden (27, 28) angeordnet oder wirksam sind, wobei vorzugsweise jeweils drei Frässchneiden zwischen den zwei Bohrschneiden in Drehrichtung angeordnet sind.

3. Bohrgewindefräser (1) nach Anspruch 1 oder Anspruch 2, bei dem
a) der radiale Abstand von der Achse (4) der am weitesten radial nach außen ragenden Bohrschneide(n) (17, 18) um eine vorgegebene positive radiale Abstandsdifferenz (t) größer ist als der radiale Abstand der am weitesten radial nach außen ragenden Frässchneide(n) (7, 8, 9, 10, 17) und
b) die vorgegebene radiale Abstandsdifferenz (t) so gewählt ist, dass beim Bohren entstehende Späne auch bei langspanenden Werkstoffen wie Stählen im Wesentlichen nicht zwischen die Frässchneide(n) und die Wandung der vom Bohrbereich erzeugten Bohrung eingeklemmt werden können und zugleich die Frässchneide(n) beim Bohren nicht in das Werkstück eingreift oder eingreifen, und/oder die vorgegebene Abstandsdifferenz (t) aus einem Bereich von 5 µm bis 30 µm oder aus einem Bereich von 10 µm bis 25 µm gewählt ist.

4. Bohrgewindefräser nach einem der vorhergehenden Ansprüche, bei dem die Spanflächen von axial zur Achse (4) benachbarten Frässchneiden (7, 8, 9, 10) im wesentlichen eine stetig ausgebildete Fläche bilden und/oder im Wesentlichen eben oder gekrümmt ausgebildet sind.

5. Bohrgewindefräser (1) nach einem der vorhergehenden Ansprüche, bei dem wenigstens eine Bohrschneide (27, 28) zumindest bereichsweise einen negativen Spanwinkel aufweist, der abhängig von dem Werkstoff des Werkstücks gewählt ist und/oder zwischen - 0,1° und - 25° oder zwischen - 1 und - 15° liegt, wobei vorzugsweise der Bohrbereich (40) wenigstens eine stirnseitige Bohrhauptschneide (27, 28) und wenigstens eine (am Umfang angeordnete) Bohrmantelschneide (17, 18) aufweist und bei der jede Bohrhauptschneide (27, 28) zumindest bereichsweise einen negativen Spanwinkel aufweist, wobei weiter vorzugsweise jede Bohrhauptschneide (27, 28) in ihrem radialen Verlauf von außen zur Achse (4) hin einen kleiner werdenden Spanwinkel aufweist und zumindest in einem inneren der Achse (4) benachbarten Bereich einen negativen Spanwinkel aufweist und/oder wobei vorzugsweise der Spanwinkel der Bohrmantelschneide(n) und der Spanwinkel der axial sich anschließenden Frässchneide(n) im Wesentlichen gleich sind und/oder wobei vorzugsweise zwischen Bohrmantelschneide (17, 18) und Bohrhauptschneide (27, 28) ein Übergangsbereich mit einer Fase (18) gebildet ist, wobei die Fase (18) insbesondere unter einem Winkel (β) von 30° bis 60°, vorzugsweise 45°, zur Achse (4) des Bohrgewindefräsers (1) angeordnet ist.

6. Bohrgewindefräser nach einem der vorhergehenden Ansprüche, bei dem die Frässchneide(n) (7, 8, 9, 10) einen abhängig vom Werkstoff des Werkstücks gewählten Spanwinkel aufweist oder aufweisen, insbesondere einen positiven Spanwinkel oder einen negativen Spanwinkel, insbesondere für Stahl als Werkstoff des Werkstücks, wobei der negative Spanwinkel vorzugsweise zwischen - 0,1° und - 25° oder zwischen - 1° und - 15° liegt.

7. Bohrgewindefräser (1) nach einem der vorhergehenden Ansprüche, bei dem axial zur Achse (4) im Anschluss an wenigstens eine Bohrschneide (17, 18, 27, 28) des Bohrbereichs (40) jeweils wenigstens eine zugehörige Frässchneide (8, 10) des Gewindefräsbereichs (30) an einem zugehörigen gemeinsamen Bohrspanraum (11, 12) zum Abführen der von der Bohrschneide erzeugten Bohrspäne und vorzugsweise auch zum Abführen der von diesen Frässchneiden erzeugten Frässpäne angeordnet sind und/oder bei dem zu den im Anschluss an die Bohrschneide(n) angeordneten Frässchneide(n) am Bohrspanraum (11, 12) in Drehrichtung versetzt angeordnet wenigstens eine weitere Frässchneide (7, 9) des Gewindefräsbereichs (30) an wenigstens einem Frässpanraum (13, 14) zum Abführen der von dieser wenigstens einen weiteren Frässchneide erzeugte Frässpäne angeordnet ist, wobei vorzugsweise das für die Spanabfuhr zur Verfügung stehende Volumen jedes Bohrspanraumes (11, 12) größer ist als das des oder der Frässpanräume (13, 14) und/oder wobei vorzugsweise jeder Frässpanraum (13, 14) an seinem der Achse (4) nächstliegenden Punkt auf einem Durchmesser (dₘᵢₙ₂) liegt, der zwischen 42 % und 75 %, vorzugsweise 60 %, des Außendurchmessers (do) des Gewindefräsbereichs (30) beträgt, und/oder wobei vorzugsweise jeder Bohrspanraum (11, 12) an seinem der Achse (4) nächstliegenden Punkt auf einem Durchmesser (dₘᵢₙ₁) liegt, der zwischen 27 % und 50 %, vorzugsweise 43 %, des Außendurchmessers (do) des Gewindefräsbereichs (30) beträgt.

8. Bohrgewindefräser nach einem der vorhergehenden Ansprüche, bei dem
a) axial zur Achse (4) im Anschluss an wenigstens eine Bohrschneide (17, 18, 27, 28) des Bohrbereichs (40) jeweils wenigstens eine zugehörige Frässchneide (8, 10) des Gewindefräsbereichs (30) an einem zugehörigen gemeinsamen Bohrspanraum (11, 12) zum Abführen der von der Bohrschneide erzeugten Bohrspäne und vorzugsweise auch zum Abführen der von diesen Frässchneiden erzeugten Frässpäne angeordnet sind und
b) der Durchmesser (dₘᵢₙ₁) jedes Bohrspanraumes (11, 12) am der Achse (4) am nächsten liegenden Punkt in axialer Erstreckung von dem Bohrbereich (40) über den Gewindefräsbereich (30) abnimmt oder das Volumen jedes Bohrspanraumes (11, 12) in axialer Erstreckung von dem Bohrbereich (40) über den Gewindefräsbereich (30) zunimmt.

9. Bohrgewindefräser nach Anspruch 7 oder Anspruch 8, bei dem
a) der Durchmesser (dₘᵢₙ₁) jedes Frässpanraumes (13, 14) am der Achse (4) am nächsten liegenden Punkt in axialer Erstreckung von dem Bohrbereich (40) über den Gewindefräsbereich (30) im Wesentlichen konstant ist oder das Volumen jedes Bohrspanraumes (11, 12) in axialer Erstreckung von dem Bohrbereich (40) über den Gewindefräsbereich (30) im Wesentlichen konstant ist
und/oder bei dem.
b) der Durchmesser (dₘᵢₙ₁) jedes Frässpanraumes (13, 14) am der Achse (4) am nächsten liegenden Punkt in axialer Erstreckung von dem Bohrbereich (40) über den Gewindefräsbereich (30) abnimmt oder das Volumen jedes Bohrspanraumes (11, 12) in axialer Erstreckung von dem Bohrbereich (40) über den Gewindefräsbereich (30) zunimmt, wobei vorzugsweise die Abnahme des Durchmessers des Bohrspanraumes oder Frässpanraumes zwischen 0,1 % und 3 % über die axiale Länge und/oder abhängig vom Werkstoff des Werkstücks, insbesondere bei hochfesten Werkstoffen des Werkstücks wie Stählen größer als bei weniger festen Werkstoffen, gewählt ist, und/oder bei dem
c) die Begrenzungsfläche zumindest eines Spanraums (11, 12, 13, 14) zumindest abschnittsweise kreisförmig oder ellipsenförmig oder parabelförmig oder hyperbelförmig verläuft und/oder zu einer radial zur Achse (4) verlaufenden Linie symmetrisch oder asymmetrisch ausgebildet ist
und/oder bei dem
d) die Spanräume (11, 12, 13, 14) rechts- oder linksverlaufende Spiralnuten oder gerade Nuten bilden.

10. Bohrgewindefräser nach einem der Ansprüche 7 bis 9, bei dem
a) eine an einem Bohrspanraum (11, 12) angeordnete Frässchneide (8, 10) zu einer in Drehrichtung vorhergehenden Frässchneide (9, 7) an einem Frässpanraum einen größeren Winkelabstand aufweist als zu einer in Drehrichtung nachfolgenden Frässchneide (7, 9) an einem Frässpanraum
und/oder bei dem
b) eine an einem Bohrspanraum (11, 12) angeordnete Frässchneide (8, 10) zu einer in Drehrichtung nachfolgenden Frässchneide (9, 7) an einem Frässpanraum einen Winkelabstand (*α*) von höchstens 88°, insbesondere zwischen 62° und 88°, vorzugsweise zwischen 82° und 85° oder zwischen 72° und 78°, aufweist.

11. Bohrgewindefräser nach einem der vorhergehenden Ansprüche, bei dem mehrere axiale Reihen von axial zur Achse (4) hintereinander angeordneten Frässchneiden (7, 8, 9, 10) vorgesehen sind, wobei vorzugsweise die Frässchneiden in jeder axialen Reihe linear parallel zur Achse (4) angeordnet sind oder die Frässchneiden in jeder axialen Reihe und/oder die zugehörigen Spanräume in einer um die Achse (4) verlaufenden Spirale oder Schraube angeordnet sind und/oder wobei vorzugsweise die Frässchneiden in jeder axialen Reihe um einen axialen Abstand voneinander beabstandet sind, der der Gewindesteigung entspricht und/oder wobei vorzugsweise die radialen Abstände der Frässchneiden in jeder axialen Reihe oder der Außenradius des Gewindefräsbereichs (30) von der Achse (4) in Richtung vom Bohrbereich (40) weg abnehmen, wobei insbesondere die Abnahme der radialen Abstände oder des Außenradius in einem Bereich zwischen 0,15 % und 1 %, insbesondere in einem Bereich zwischen 0,15 % und 0,5 % und vorzugsweise bei etwa 0,2 %, über die axiale Länge gewählt ist.

12. Bohrgewindefräser nach einem der vorhergehenden Ansprüche, bei dem die in Werkzeugdrehrichtung (15) der einen Frässchneide (7, 9) nachfolgende andere Frässchneide (8, 10) an der Stirnseite (16) um einen vorgegebenen Betrag in axiale Richtung (a) zurückversetzt ist und/oder bei dem mindestens ein sich mindestens teilweise in axiale Richtung (a) erstreckender Kühlmittelkanal (23) direkt oder indirekt an einem Spanaufnahmeraum (11, 12, 13, 14) mündet, der zwischen Frässchneiden (7, 8, 9, 10) ausgebildet wird, wobei vorzugsweise sich mindestens eine Querbohrung oder Abzweigung von dem Kühlmittelkanal (23) zu dem Spanaufnahmeraum (11, 12, 13, 14) erstreckt, und/oder bei dem im Bereich der Stirnseite (16) und/oder des Bohrbereiches (40) eine Austrittsöffnung für Kühl-und/oder -schmiermittel angeordnet ist.

13. Bohrgewindefräser nach einem der vorhergehenden Ansprüche, bei dem zumindest eine Frässchneide eine definierte Schneidkantenverrundung aufweist, insbesondere um eine höhere Stabilität zu erreichen, und/oder bei dem zumindest eine Bohrschneide, vorzugsweise jede Bohrhauptschneide, eine definierte Schneidkantenverrundung aufweist, insbesondere um ein besseres Spanbrechverhalten zu erzielen und/oder die Schneide zu stabilisieren, wobei die Schneidkantenverrundung vorzugsweise durch Bürsten und/oder Sandstrahlen ggf. mit einem vorherigen Fasenanschnitt erzeugt ist, und/oder bei dem zumindest ein Teil der Bohrschneiden und/oder Frässchneiden (7, 8, 9, 10) eine Beschichtung mit Hartstoff aufweist.

14. Bohrgewindefräser nach einem der vorhergehenden Ansprüche, bei dem zwischen Gewindefräsbereich (30) und einem Schaft (21) ein Senkabschnitt (20) angeordnet ist, wobei vorzugsweise der Senkabschnitt (20) eine Schneidkante aufweist, die unter 45° zur Achse (4) des Bohrgewindefräsers (1) angeordnet ist.
